# EUROPÄISCHE PATENTSCHRIFT

(11) **EP 0 837 538 B1**
(45) Veröffentlichungstag und Bekanntmachung des Hinweises auf die Patenterteilung: **14.03.2001**
(21) Anmeldenummer: 97110186.0
(22) Anmeldetag: 21.06.1997
(51) Int. Cl.: H02K 1/27, H02K 1/24, H02K 21/04

(54) **Klauenpolgenerator mit permanentmagneten**
Claw pole generator with permanent magnets
Générateur à poles à griffes avec aimants permanents

(30) Priorität: 17.10.1996 DE 19642784
(43) Veröffentlichungstag der Anmeldung: 22.04.1998
(73) Patentinhaber: ROBERT BOSCH GMBH, 70442 Stuttgart (DE)
(72) Erfinder: Ragaly, Istvan, 71701 Schwieberdingen (DE)

(56) Entgegenhaltungen:
- GB-A- 2 281 665
- US-A- 5 543 676
- PATENT ABSTRACTS OF JAPAN vol. 017, no. 371 (E-1396), 13.Juli 1993 & JP 05 056616 A (NIPPONDENSO CO LTD), 5.März 1993,
- PATENT ABSTRACTS OF JAPAN vol. 096, no. 003, 29.März 1996 & JP 07 312854 A (HITACHI LTD), 28.November 1995,

## Beschreibung

### Stand der Technik

Die Erfindung betrifft einen Klauenpolgenerator gemäß Oberbegriff des Anspruchs 1.

Klauenpolgeneratoren der angesprochenen Art sind allgemein bekannt. Wie beispielsweise in der Patentschrift 1 209 651 offenbart, umfaßt ein Klauenpolgenerator eine Antriebswelle, auf die eine Erregerwicklung aufgebracht ist. Benachbart zu jeder Längsseite der Erregerwicklung ist eine Polradhälfte auf die Antriebswelle mit Läuferkern aufgeschoben. Jede Polradhälfte besteht aus einer Polradscheibe, auch als Platine bezeichnet, von deren Randbereich in Längsrichtung verlaufende klauenförmige Magnetpole, auch als Klauen bezeichnet, ausgehen. Die beiden Polradhälften sind dabei so angeordnet, daß die Klauen einer Polradhälfte in Räume zwischen den Klauen der anderen Polradhälfte eingreifen und die Erregerwicklung umfassen.

Zur Erzielung einer möglichst großen Leistung ist es notwendig, den beispielsweise zwischen benachbarten Klauen auftretenden magnetischen Streufluß zu eliminieren beziehungsweise klein zu halten.

Gemäß der genannten Druckschrift sind zwischen benachbarten Klauen Dauermagnete eingebracht, die dem magnetischen Streufluß entgegenwirken und damit verringern. Zur Befestigung der Dauermagnete dient jeweils eine den Magneten durchsetzende Schraube, die aus einem nicht magnetisierbaren Material gefertigt sein muß.

Diese Art der Befestigung ist jedoch für die Serienproduktion nicht geeignet.

### Vorteile der Erfindung

Der Klauenpolgenerator mit den Merkmalen des Anspruchs 1 hat demgegenüber den Vorteil, daß die Dauermagnete, im folgenden als permanentmagnetische Teile beziehungsweise PM-Teile bezeichnet, sehr einfach ohne Befestigungshilfsmittel anbringbar sind. Eine sichere Unterbringung der PM-Teile bleibt jedoch auch bei den hohen mechanischen Belastungen bedingt durch die bei höheren Drehzahlen wirkende große Zentrifugalkraft gewährleistet.

Dadurch, daß in zumindest einer Polradhälfte in Längsrichtung der Antriebswelle sich in der Platine erstreckende Nuten mit einer Hinterschneidung vorgesehen sind, lassen sich die entsprechend ausgebildeten PM-Teile in Längsrichtung einschieben. Die Hinterschneidung sorgt dabei für die radiale Abstützung und Sicherung, so daß keine weiteren Befestigungsmittel, wie Schrauben etc., notwendig sind.

Bei der Herstellung des Generators müssen die PM-Teile also lediglich von der Seite in die Nuten eingeschoben werden, ohne noch einen weiteren Arbeitsgang für die Befestigung durchführen zu müssen.

Die Nuten können zum Beispiel einen im wesentlichen kreisförmigen Querschnitt haben oder schwalbenschwanzförmig ausgebildet sein. Selbstverständlich sind auch alle anderen Formen, die eine oder mehrere Hinterschneidungen aufweisen, denkbar.

Zur Verbesserung der radialen Abstützung der in die Nuten eingebrachten PM-Teile sind vorzugsweise Bogensegmente aus unmagnetischem Material vorgesehen, die zusammen mit den PM-Teilen in die Nuten eingebracht werden. Sie sind der der Antriebswelle abgewandten Seite der PM-Teile zugewandt und erstrecken sich vorzugsweise über die Breite der Platine.

Vorzugsweise erstrecken sich die PM-Teile in Längsrichtung bis unter die Spitze der eingreifenden Klaue, so daß zumindest im Bereich der Klauenspitze dem Streufluß entgegengewirkt wird.

Besonders vorteilhaft sind jedoch PM-Teile, die sich im gesamten Bereich zwischen zwei benachbarten Klauen befinden. Vorzugsweise sind dann die PM-Teile jeweils bis zur Mitte einer Klaue in Längsrichtung verlängert, so daß durch die aufeinandertreffenden PM-Teile der beiden Polradhälften eine Abdeckung des gesamten Raums zwischen den Klauen erzielbar ist.

Als besonders vorteilhaft hat sich die Ausbildung einer zur Antriebswelle hin geschlossenen in Draufsicht V-förmigen Ausnehmung im PM-Teil herausgestellt, wobei in die Ausnehmung ein Endabschnitt eine Klaue, das heißt die Spitze eines Klauenpols eingreift. Die zur Antriebswelle hin geschlossene Ausnehmung in einem PM-Teil bietet eine höhere Stabilität, wobei der radial innenliegende Boden beabstandet zum Klauenpol liegen sollte, um auch bei hohen Drehzahlen und damit großen Zentrifugalkräften, ein Aufweiten der Klauenpole zu verhindern.

Zur Verbesserung der Handhabbarkeit sind vorzugsweise die einer Polradhälfte zugeordneten PM-Teile auf einem Ring angebracht (im folgenden als PM-Teil-Ring bezeichnet), so daß nicht eine Vielzahl von einzelnen einzusetzen PM-Teilen vorliegt, sondern diese als Einheit in die Nuten einsteckbar sind. Ferner können die PM-Teile selbst den Ring bilden bzw. zu einem Ring zusammengesetzt werden.

Werden zwei solcher PM-Teil-Ringe benutzt, so läßt sich ein radiales Aufweiten des innenliegenden Randbereichs der Ringe dadurch vermeiden, daß zwischen die beiden PM-Teil-Ringe eine gezahnte Ringscheibe aus unmagnetischem Material eingesetzt wird, deren Zähne sich radial nach außen verbreitern. Eine entsprechende Ausgestaltung der an den Zähnen anliegenden Flächen der PM-Teil-Ringe sorgt dann dafür, daß eine Aufweitung radial nach außen nicht möglich ist.

Vorteilhaft ist es auch, die den beiden Polradhälften zugeordneten PM-Teile auf einem gemeinsamen Ring anzubringen, so daß nur noch ein einziges Bauteil handzuhaben ist. Dies führt zu einer Vereinfachung des Zusammenbaus des Generators.

Als besonders vorteilhafte Ausführungsform hat sich ein Ring mit PM-Teilen herausgestellt, wobei die im zusammengebauten Zustand unter den Klauen liegenden Ringbereiche ausgespart sind. Ohne eine nennenswerte Stabilitätsbeeinträchtigung läßt sich die träge Masse des PM-Teil-Rings deutlich verringern, was die Antriebsbedingungen des Generators verbessert.

Weitere vorteilhafte Ausgestaltungen der Erfindung ergeben sich aus den übrigen Unteransprüchen und der Beschreibung.

### Zeichnungen

Die Erfindung wird nun anhand von Ausführungsbeispielen mit Bezugnahme auf die Zeichnungen detailliert beschrieben.

Dabei zeigen:
- Figur 1: eine perspektivische Darstellung eines Klauenpolgenerators,
- Figuren 2a bis c: unterschiedliche Ausbildungsformen von Nuten in der Platine einer Polradhälfte,
- Figuren 3a bis c: drei unterschiedliche Darstellungen eines Polrads gemäß einem ersten Ausführungsbeispiel,
- Figuren 4a bis c: drei unterschiedliche Darstellungen eines Polrads gemäß einem zweiten Ausführungsbeispiel,
- Figuren 5a bis c: drei unterschiedliche Ansichten eines Polrads gemäß einem dritten Ausführungsbeispiel,
- Figur 6a bis c: drei unterschiedliche Ansichten eines Polrads gemäß einem vierten Ausführungsbeispiel,
- Figur 7: drei unterschiedliche Ansichten eines Polrads gemäß einem fünften Ausführungsbeispiel,
- Figuren 8a bis c: drei unterschiedliche Ansichten eines Polrads gemäß einem sechsten Ausführungsbeispiel, und
- Figur 9: ein schematischer Ausschnitt eines schleifringlosen Generators.

### Ausführungsbeispiele

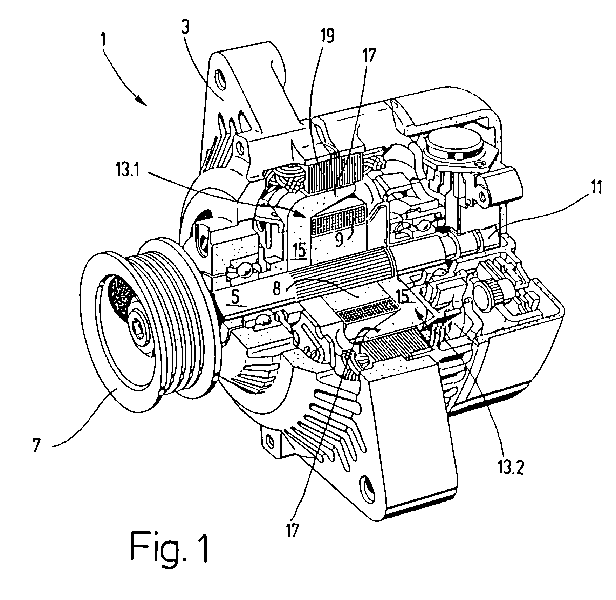

Zum besseren Verständnis der Erfindung ist in Figur 1 der allgemeine Aufbau eines Klauenpolgenerators gezeigt, wobei jedoch lediglich auf die wesentlichen Bauteile eingegangen wird.

Der Klauenpolgenerator 1 weist ein Gehäuse 3 auf, in dem eine Antriebswelle 5 gelagert ist. Am außerhalb des Gehäuses 3 liegenden Ende der Antriebswelle 5 ist eine Riemenscheibe 7 angebracht, über die die Antriebswelle 5 mit einem Polkern 8, beispielsweise über einen Keilriemen angetrieben wird. Innerhalb des Gehäuses ist auf der Antriebswelle 5 eine Erregerwicklung 9 drehfest aufgebracht und über ebenfalls auf der Antriebswelle aufgebrachte Schleifringe 11 mit dem verhältnismäßig kleinen Erregerstrom bestromt. Die Erregerwicklung 9 ist seitlich umgeben von jeweils einer Polradhälfte 13.1 beziehungsweise 13.2, die sich jeweils aus einer senkrecht zur Antriebswelle 5 verlaufenden Polradscheibe 15, im folgenden auch als Platine bezeichnet und längs zur Antriebswelle 5 verlaufenden klaufenförmigen Magnetpolen 17, im folgenden kurz Klauen genannt, zusammensetzt. Jede der Polradhälften 13 weist eine Vielzahl dieser in Umfangsrichtung gleichmäßig zueinander beabstandeten Klauen 17 auf, wobei die Anzahl vom Anwendungszweck des Generators abhängt.

Aus der Figur 1 ist zu entnehmen, daß die Klauen der sich gegenüberliegenden Polradhälften 13.1 und 13.2 ineinandergreifen, so daß sich in Umfangsrichtung des Polrads gesehen bei bestromter Erregerwicklung 9 abwechselnd Süd- und Nordpole ausbilden.

Radial beabstandet zu den Klauen 17 der beiden Polradhälften 13 ist ein feststehender Ständer 19 angeordnet, der beispielsweise eine dreiphasige Ständerwicklung aufweist. Der Ständer 19 selbst besteht aus gegeneinander isolierten, mit Nuten versehenen Blechen, die zu einem festen Blechpaket zusammengepreßt sind. In die Nuten sind -in Figur 1 teilweise zu erkennende- Windungen der Ständerwicklungen eingebettet.

Im Betrieb stellt sich ein magnetischer Fluß ein, der vom Kern der Erregerwicklung 9, dem sogenannten Polkern 8 über die Platine 15 und die Klaue 17 einer Polradhälfte 13.1 zum Ständer 19 verläuft und von dort in die benachbarte Klaue der anderen Polradhälfte 13.2 und über die Platine 15 zum Polkern, womit sich der magnetische Kreis wieder schließt. Bei herkömmlichen Generatoren tritt dabei ein nicht unbeachtlicher Streufluß im Luftspalt zwischen zwei benachbarten Klauen auf.

Zur Vermeidung beziehungsweise Verringerung dieses Streuflusses sind in diesen Spalt Permanentmagnete eingebracht, die dem Streufluß entgegenwirken.

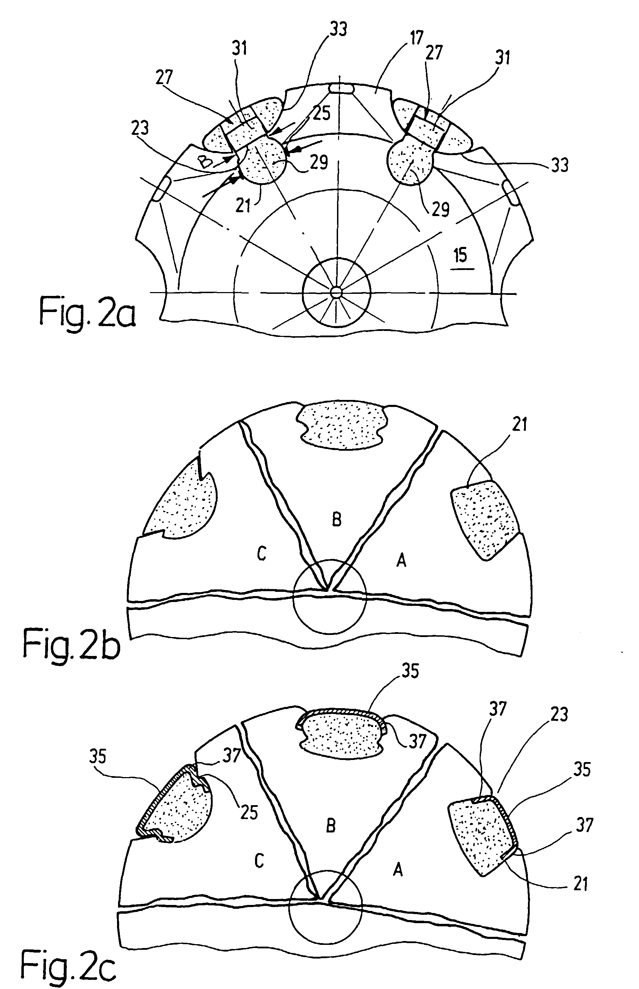

Die Anordnung und Befestigung dieser PM-Teile wird nun mit Bezugnahme auf Figur 2 erläutert.

So zeigt Figur 2a eine Hälfte einer Platine 15 in Draufsicht, von deren Rand die Klauen 17 ausgehen. Im Bereich zwischen den Klauen 17 sind Nuten 21 in der Platine (Pollücken) in radialer Richtung eingebracht. Die in Figur 2a gezeigte Nut 21 weist einen im wesentlichen kreisförmigen Querschnitt auf, wobei die Breite B der Nutöffnung 23 kleiner ist als die Breite eines radial weiter innen liegenden Bereichs 25. Dieses Verhältnis zwischen den Breiten eines äußeren Nutabschnitts und eines radial weiter innen liegenden Nutabschnitts wird im folgenden als Hinterschneidung bezeichnet.

Bei einer im Querschnitt kreisförmigen Nut bedeutet das, daß die Breite B der Nutöffnung 23 kleiner ist als der Kreisdurchmesser.

In die zumindest zu einer Längsseite in der Platine 15 hin geöffnete Nut 21 ist ein PM-Teil 27 eingeschoben. Ein innerhalb der Platine liegender Abschnitt 29 des PM-Teils 27 ist der Form der Nut 21 angepaßt, so daß aufgrund der Hinterschneidung eine radiale Festlegung erzielt ist. Die Hinterschneidung dient also dazu, die bedingt durch hohe Drehzahlen großen Zentrifugalkräfte aufzunehmen.

Figur 2a läßt noch erkennen, daß ein außenliegender Abschnitt 31 des PM-Teils 27 so ausgebildet ist, daß Flächen 33 an entsprechenden Flächen der Platine 15 anliegen. Damit wird eine Verdrehsicherung des PM-Teils in der kreisförmigen Nut 21 gewährleistet.

Weitere Formgestaltungen der Nut 21 sind in Figur 2b dargestellt. So weist die Nut 21 im Ausschnitt A eine Trapezform auf. Im Ausschnitt B sind die Seitenwände der Nut 21 profiliert, wobei hier mehrere Hinterschneidungen ausgebildet sind.

Eine weitere Ausgestaltung ist in Ausschnitt C zu sehen. Hierbei hat der Querschnitt der Nut eine schwalbenschwanzähnliche Form.

Selbstverständlich sind auch andere an die jeweiligen Anforderungen bezüglich der mechanischen Belastung angepaßte Gestaltungsformen möglich. Ihnen allen ist jedoch gemeinsam, daß sie eine Hinterschneidung aufweisen, die bei entsprechender Ausgestaltung der PM-Teile eine radiale Fixierung ermöglichen, und sich in der Platine zwischen gleichpoligen Klauen befindet.

Die mechanische Stabilität und Sicherheit der PM-Teile läßt sich durch ein Einschieben eines Bogensegments 35 aus nicht ferromagnetischem Material, wie in Figur 2c dargestellt, weiter erhöhen. Dieses Bogensegment 35 überspannt die Nutöffnung 23 und liegt mit Randabschnitten 37 an der Seitenwand der Nut 21 an. Die Randabschnitte 37 erstrecken sich bis in den Bereich der Hinterschneidung, so daß auch sie radial fixiert sind. In Längsrichtung gesehen erstrecken sich die Bogensegmente über die gesamte Breite beziehungsweise Dicke der Platine 15.

Diese Bogensegmente 35 gewährleisten somit bei entsprechender Auslegung eine zusätzliche Sicherung, um die Stabilität der PM-Teile bei hohen Drehzahlen zu verbessern.

Aus den drei Ausschnitten A, B und C wird deutlich, daß die Randabschnitte 37 der Bogensegmente 35 jeweils an die Form der Nut anzupassen sind und sich, wie in Ansicht C zu sehen, mindestens in den Bereich der ersten Hinterschneidung 25 erstrecken müssen.

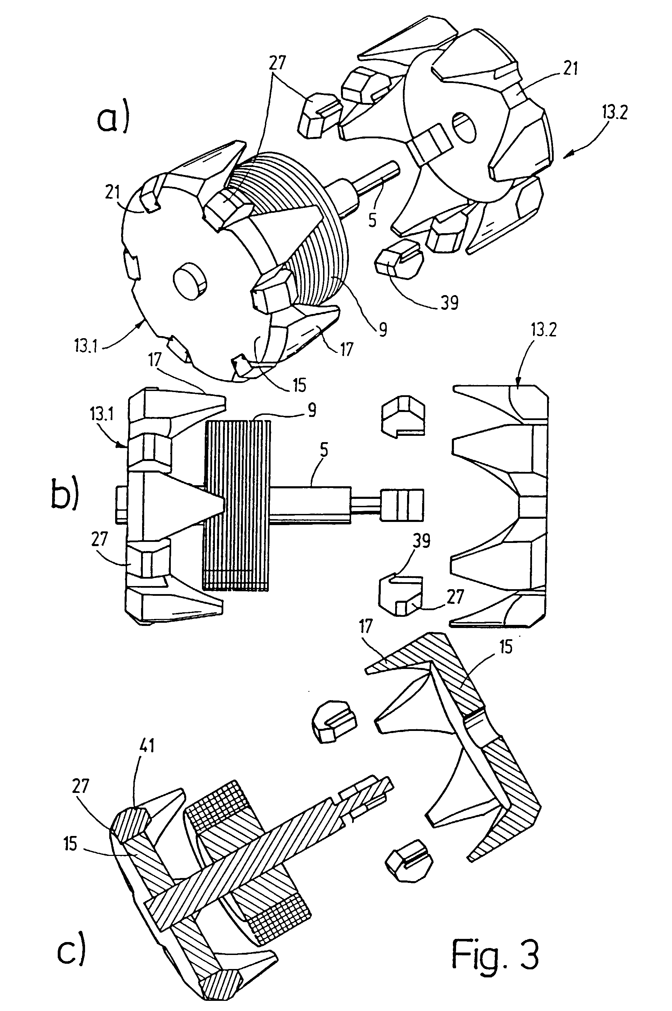

Figur 3 zeigt in drei unterschiedlichen Perspektiven die Läuferbaugruppe des in Figur 1 beschriebenen Generators, bestehend aus den beiden Polradhälften 13, der Erregerwicklung, der Antriebswelle 5 und den PM-Teilen 21 in einer Explosionsdarstellung.

Wie bereits erwähnt, sind die in diesem Ausführungsbeispiel trapezförmigen Nuten 21 in die Platine 15 im Bereich zwischen jeweils zwei Klauen 17 eingebracht. Bei dem gezeigten Polrad mit sechs Klauen pro Polradhälfte sind also jeweils sechs PM-Teile 27 einzusetzen. Die PM-Teile 27 werden vor dem Zusammensetzen der beiden Polradhälften 13 (in die Nuten) von der der Erregerwicklung 9 zugewandten also innenliegenden Seite her eingeschoben.

In der Figur 3 ist deutlich zu erkennen, daß die PM-Teile 27 einen Anschlag 39 aufweisen, der den Einschiebeweg in die Nuten 21 begrenzt. Es läßt sich damit eine exakte Positionierung gewährleisten.

Die PM-Teile 27 weisen darüber hinaus eine radial außen liegende schräge Fläche 41 auf, in deren Bereich die Spitze einer Klaue 17 des gegenüberliegenden Polrads 13 endet. Die PM-Teile 27 sind folglich bei montierten Polradhälften sicher sowohl in Längs- als auch in radialer Richtung gehalten, ohne daß Schrauben oder sonstige Befestigungsteile verwendet werden müßten.

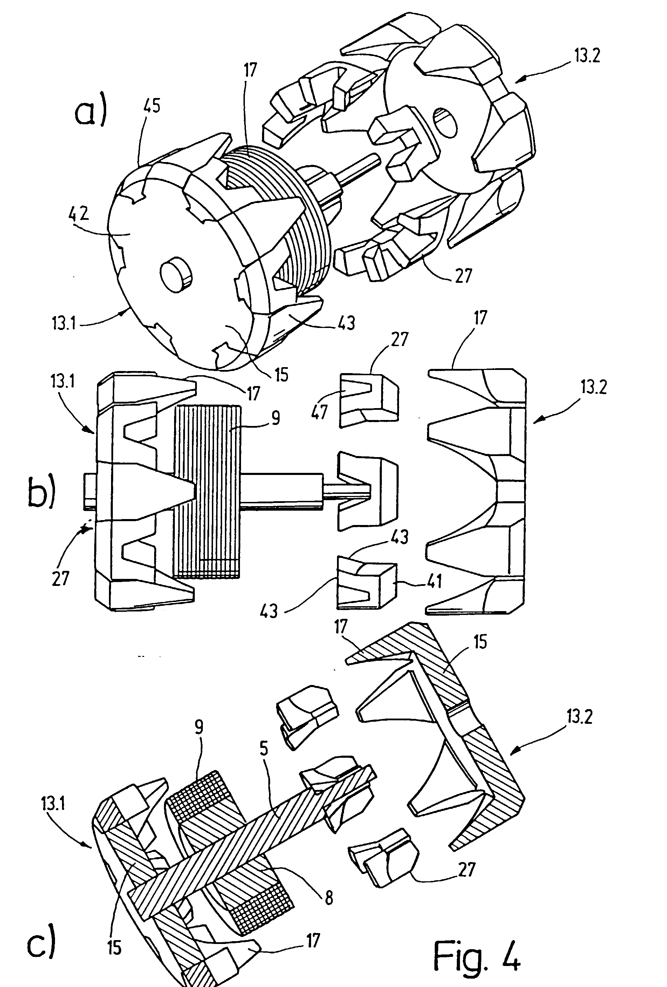

Figur 4 zeigt ein weiteres Ausführungsbeispiel der Erfindung. Der Unterschied liegt jedoch lediglich bei der Formgestaltung der PM-Teile 27, so daß auf die nochmalige Beschreibung der anderen, mit gleichen Bezugszeichen wie das Ausführungsbeispiel gemäß Figur 3 gekennzeichneten Teile verzichtet wird.

In diesem Ausführungsbeispiel weisen die PM-Teile 27 eine U- beziehungsweise V-Form auf, mit einem Grundkörper 42 und zwei davon ausgehenden Schenkeln 43.

Der Grundkörper 42 weist den an die Nutenform angepaßten Abschnitt auf, der auch in diesem Ausführungsbeispiel trapezförmig ist. Der außerhalb der Nut liegende Abschnitt des Grundkörpers 42 füllt den Bereich zwischen den beiden Klauen 17 vollständig aus, wobei dessen Erstreckung in Längsrichtung etwa der Dicke der Platine 15 entspricht. Die Gestaltung der nach außen zeigenden Fläche des Grundkörpers 42 ist an die Form der Platine 15 und der Klauen 17 angepaßt, so daß eine einheitliche, im wesentlichen glatte Fläche entsteht. Im gezeigten Ausführungsbeispiel wird hierzu eine im Übergangsbereich zwischen Platine und Klaue vorgesehene Fase 45 vom Grundkörper 41 fortgesetzt.

Die beiden Schenkel 43 liegen dicht an den jeweils benachbarten Klauen 17 an und erstrecken sich in Längsrichtung bis etwa zur Mitte der Klaue 17. Im montierten Zustand wird somit der Spalt zwischen zwei benachbarten Klauen 17 durch die Schenkel zweier PM-Teile 27 im wesentlichen vollständig ausgefüllt.

Die Breite der Schenkel 43 eines PM-Teils 27 ist so gewählt, daß ein zwischen Ihnen aufgespannter Raum 47 zur Aufnahme eines Endabschnitts einer Klaue 17 geeignet ist.

Um zu verhindern, daß die Enden der Schenkel 43 sich bei hohen Drehzahlen, das heißt unter Einfluß großer Zentrifugalkräfte radial nach außen biegen, verengt sich der Raum 47 in radialer Richtung nach innen. Eine entsprechende Ausbildung der Seitenflächen der Klaue 17 liefert dann eine radiale Abstützung.

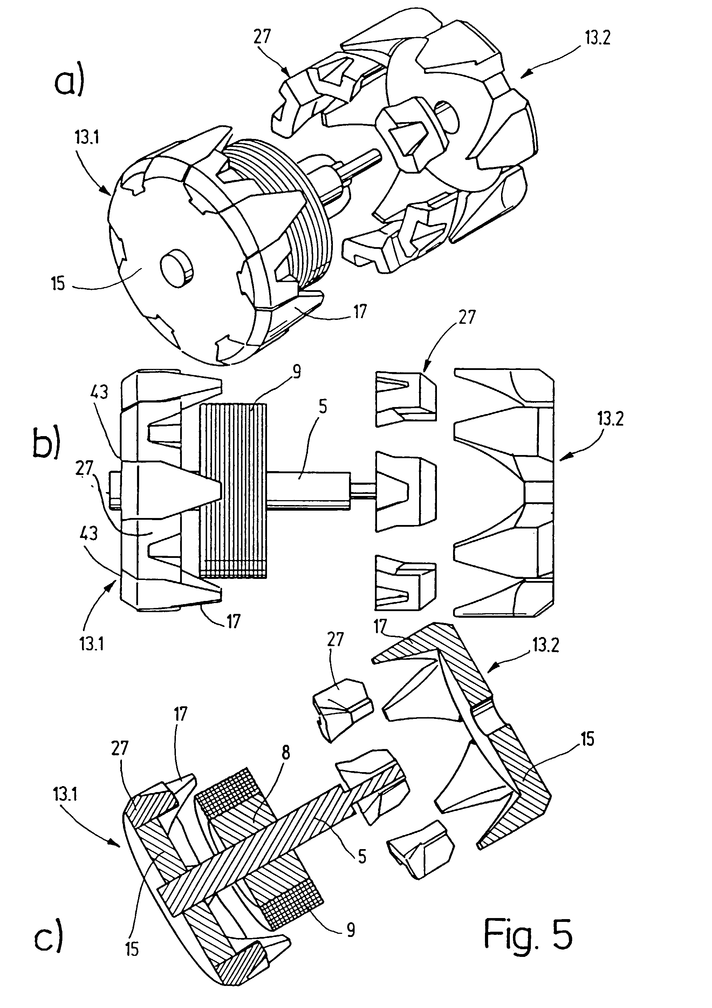

In Figur 5 ist ein weiteres Ausführungsbeispiel der Erfindung dargestellt. Es entspricht im wesentlichen dem zuvor beschriebenen Ausführungsbeispiel, weshalb auf eine nochmalige Beschreibung der mit gleichen Bezugszeichen gekennzeichneten Teile verzichtet wird.

Der Unterschied liegt darin, daß die Schenkel 43 eines PM-Teils 27 an ihrer radial innen liegenden Seite miteinander verbunden sind. Dieses Verbindungsstück untergreift im montierten Zustand des Generators den Endabschnitt einer Klaue 17 und sorgt für eine zusätzliche Stabilisierung.

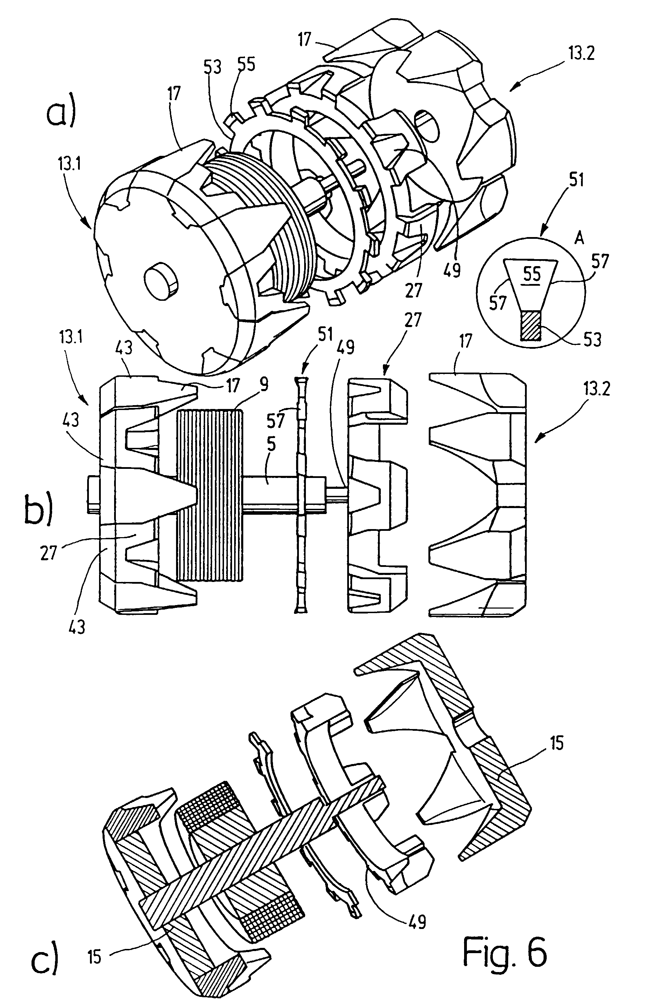

Eine die Montage der PM-Teile 27 erleichternde Ausführungsform ist in Figur 6 dargestellt. Hier sind die zuvor in Bezug auf die Figur 5 bereits beschriebenen PM-Teile auf einem Ring 49 aufgebracht. Die einer Polradhälfte 13 zugeordneten PM-Teile sind somit als Einheit handhabbar und folglich sehr leicht auf der Polradhälfte zu montieren. Bei auf die Polradhälfte aufgestecktem PM-Ring ist der Durchmesser des PM-Rings 49 so gewählt, daß die zwischen den PM-Teilen 27 verlaufenden Abschnitte die Klauen 17 der jeweiligen Polradhälfte 13 untergreifen.

Um jedoch im in Längsrichtung gesehen innenliegenden Bereich der PM-Teile 27 eine radiale Aufweitung der Schenkel 43 zu verhindern, ist eine aus einem nicht magnetischen Material gefertigte Zahn-Scheibe 51 vorgesehen. Sie setzt sich, wie in Figur 6a zu sehen, aus einem Ring 53 und einer Anzahl von radial nach außen verlaufenden Zähnen 55 zusammen. Die Anzahl der Zähne 55 entspricht dabei der Anzahl der Spalte zwischen zwei benachbarten Klauen. Diese Anzahl wiederum entspricht der Gesamtzahl der einer Polradhälfte zugeordneten PM-Teile.

Der Abstand der Zähne 55 zueinander in Umfangsrichtung entspricht dem Abstand benachbarter Schenkel 43 der PM-Teile 27, so daß im aufgesetzten Zustand Stirnflächen 57 der Zähne 55 an den Enden der Schenkel 43 der PM-Teile 27 anliegen.

Um eine Aufweitung der Schenkel zu vermeiden, verlaufen die Stirnflächen 57 jedes Zahns 55 konisch, wobei der Abstand zwischen den beiden Stirnflächen 57 radial nach außen zunimmt. In der Ausschnittszeichnung A ist diese Form eines Zahns 51 nochmals deutlich dargestellt. Bei entsprechender Ausbildung der an den Stirnflächen 57 anliegenden Flächen der Schenkel 43 lassen sich Zentrifugalkräfte von der Scheibe 51 aufnehmen.

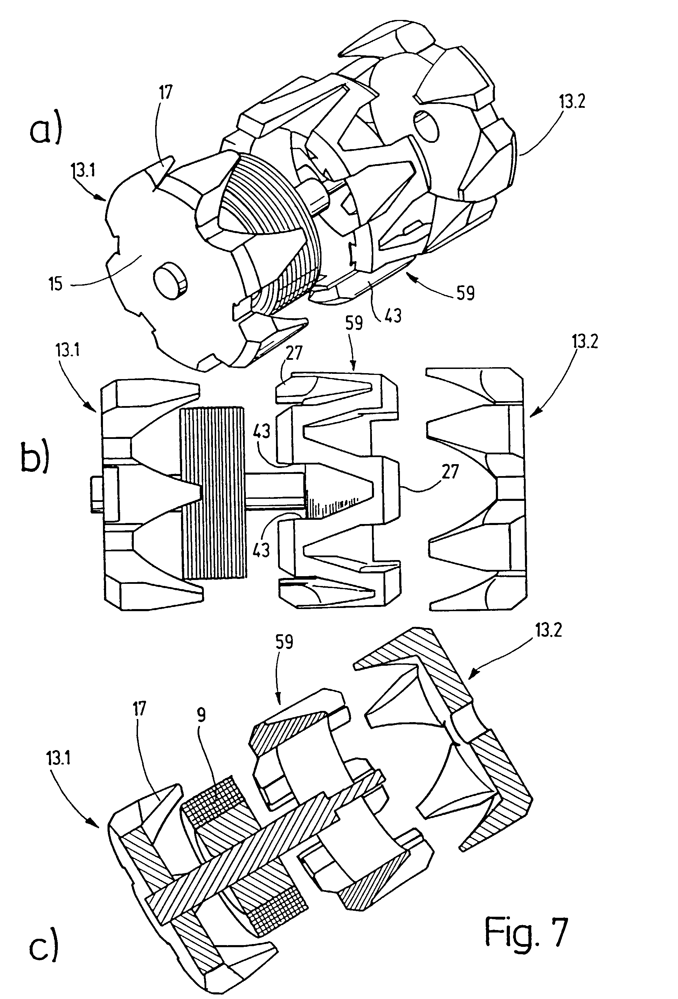

In Figur 7 ist ein weiteres Ausführungsbeispiel der Erfindung dargestellt. Im Unterschied zu dem zuvor beschriebenen Ausführungsbeispiel sind die beiden die PM-Teile aufweisenden Ringe 49 zu einem einzigen Ring 59 zusammengesetzt. Der damit erzielbare Vorteil ist insbesondere in der leichteren Handhabbarkeit und der Vereinfachung des Zusammenbaus zu sehen. Rein funktional ergeben sich jedoch keine Unterschiede, so daß auf eine nähere Beschreibung der mit gleichen Bezugszeichen gekennzeichneten Teile verzichtet wird.

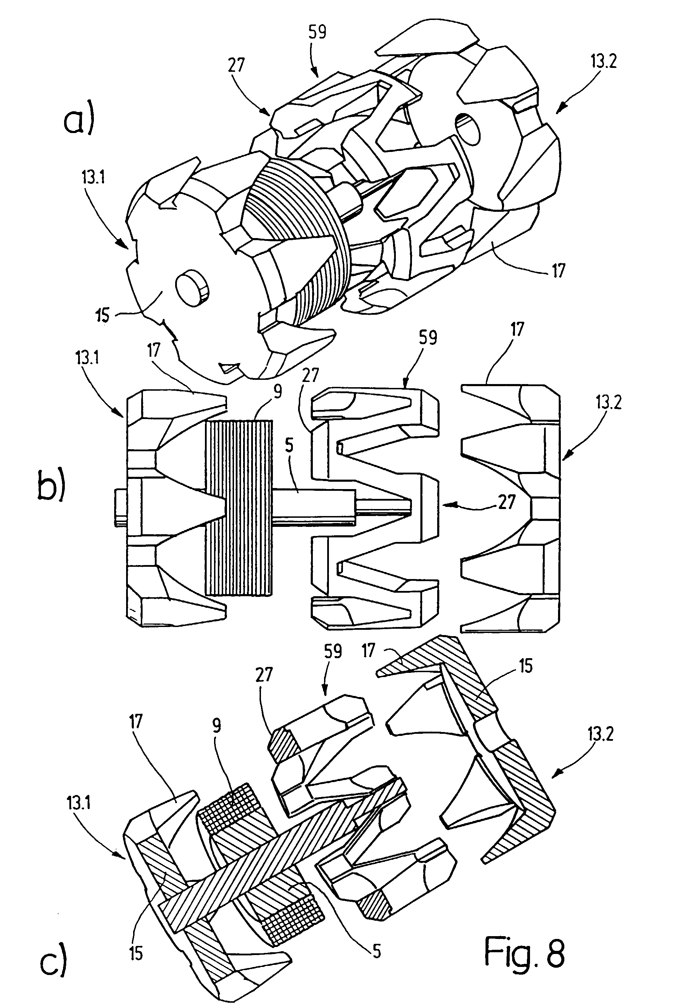

Zur Verminderung der trägen Masse eines solchen Rings 59 sind in dem in Figur 8 gezeigten Ausführungsbeispiel die Verbindungsabschnitte zwischen den Schenkeln 43 weggelassen. Die Verbindung zwischen gegenüberliegenden PM-Teilen 27 erfolgt somit lediglich über die Schenkel 43. Wie in Figur 8b deutlich zu erkennen, ergibt sich auf diese Weise ein Zickzack-förmiger Verlauf des PM-Rings 59.

Selbstverständlich sind auch andere Formen des PM-Rings 59 beziehungsweise der PM-Teile 27 denkbar. Entscheidend ist lediglich, daß die PM-Teile in Nuten einschiebbar und radial fixiert sind und daß ein möglichst großer Bereich des Luftspalts zwischen benachbarten Klauen zur Verringerung des Streuflusses mit PM-Teilen ausgefüllt ist.

Zu erwähnen ist noch, daß die PM-Teile im eingesetzten Zustand bei allen gezeigten Ausführungsbeispielen nach dem Aufmagnetisieren durch Anlegen eines magnetischen Felds imprägniert werden, so daß sich eine weitere Erhöhung der mechanischen Festigkeit ergibt. Bei Einsatz einer Scheibe 51 läßt sich durch das Imprägnieren ebenfalls eine gute Verbindung mit den PM-Teilen erreichen. Um zu verhindern, daß eventuell abgelöste PM-Teilchen in den Luftspalt zwischen Läufer und Ständer gelangen, können die PM-Teile 27 mit einem dünnen thermisch beständigen Kunststoffüberzug versehen werden.

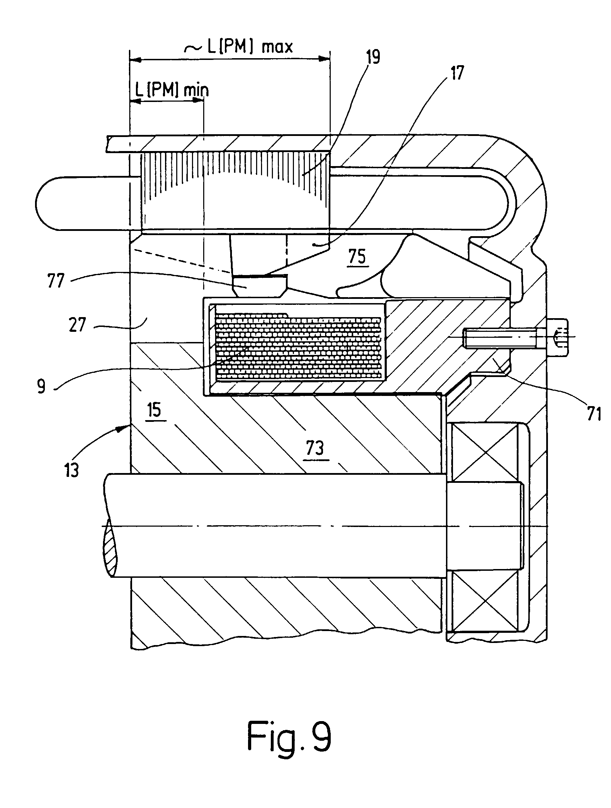

Die vorbeschriebene erfindungsgemäße Befestigung von PM-Teilen läßt sich selbstverständlich nicht nur bei den Generatoren mit Schleifringen einsetzen wie in Figur 1 gezeigt, sondern auch bei schleifringlosen Generatoren. Dem Bauprinzip folgend, möglichst wenig Verschleißteile im Generator zu verwenden, um so ausgedehnte wartungsfreie Laufzeiten zu erzielen, weist dieser Generatortyp eine feststehende, auf einem Innenpol sitzende Erregerwicklung auf. In Figur 9 ist schematisch ein Ausschnitt eines solchen schleifringlosen Generators gezeigt.

Deutlich zu erkennen ist die Erregerwicklung 9, die über ein als Innenpol bezeichnetes Bauteil 71 fest mit dem Gehäuse verbunden ist. Die sich drehende Polradhälfte 13 weist einen Längsabschnitt 73 auf, der -in radialer Richtung gesehen- innerhalb des Innenpols 71 liegt und als Polkern bezeichnet wird. Von der Platine 15 gehen Klauen 17 aus. Im übrigen sind gleiche Teile mit gleichen Bezugszeichen wie in Figur 1 gekennzeichnet.

Im Gegensatz zu dem zuvor beschriebenen Generatortyp weist der schleifringlose Generator jedoch keine zweite Polradhälfte auf, die die anderen in die Zwischenräume eingreifenden Klauen stützt. Diese Klauen 75 sind vielmehr an der Polradhälfte 13 angebracht, wobei die Verbindung ein unmagnetischer Haltering 77 übernimmt. Auf eine detailliertere Beschreibung soll an dieser Stelle nicht eingegangen werden, da schleifringlose Generatoren als solche dem Fachmann bekannt sind.

Figur 9 läßt noch erkennen, daß im Bereich der Platine 15 ein PM-Teil 27 angebracht ist. Dieses PM-Teil 27 soll sich zumindest über eine Länge L (PM)ₘᵢₙ erstrecken. Die maximale Länge L (PM)ₘₐₓ soll jedoch die Längserstreckung der Klaue 17 nicht überschreiten.

Bei der Dimensionierung der PM-Teile ist darauf zu achten, daß im Streubereich der Klauen 17 keine Überkompensation auftritt. Eine solche Überkompensation würde bei hohen Drehzahlen und geringer Belastung des Generators eine zu hohe Generatorspannung erzeugen, auch wenn der Erregerstrom vollständig unterbrochen wird.

Die Befestigung der PM-Teile 27 auf der Platine 15 läßt sich, wie bei den zuvor beschriebenen Ausführungsbeispielen durchführen. Als PM-Teile 27 lassen sich die mit Bezug auf die Figuren 3 bis 6 angegebenen Ausgestaltungen einsetzen.

Eine weitere Einsatzmöglichkeit der erfindungsgemäßen Befestigung von PM-Teilen ist bei doppelschleifringlosen Generatoren zu sehen. Diese umfassen bekanntermaßen zwei spiegelsymmetrisch aufgebaute schleifringlose Generatoren, wie in Bezug auf die Figur 9 beschrieben. Die beiden Einzelgeneratoren sind dabei so auf der Antriebswelle angeordnet, daß sich die jeweiligen Platinen 15 gegenüberliegen. Dabei ist zu beachten, daß die PM-Teile vor dem Aufschieben der beiden Polradhälften auf die Antriebswelle eingesetzt werden.

Werden die beiden Polradhälften der zwei Einzelgeneratoren per Preßsitz auf der Antriebswelle befestigt, ist die Aufmagnetisierung der PM-Teile am fertig montierten Läufer vorzunehmen.

Wird lediglich eine Polradhälfte per Preßsitz mit der Antriebswelle verbunden, läßt sich die andere Polradhälfte, beispielsweise per Schraubverbindung an der gegenüberliegenden Polradhälfte anbringen. Dies hat den Vorteil, daß eine Polradhälfte nach Lösen der Schrauben verschiebbar ist, um so auch nachträglich die bereits aufmagnetisierten PM-Teile einzubringen.

Ein zusätzlicher Kühlungseffekt läßt sich dadurch erzielen, daß beispielsweise jedes -in Umfangsrichtung gesehen- zweite PM-Teil um wenige Millimeter in radialer Richtung verkleinert wird.

## Patentansprüche

1. Klauenpolgenerator mit zwei auf einer Antriebswelle aufgebrachten Polradhälften (13), die auf einer scheibenförmigen Platine (15) angebrachte klauenförmige Magnetpole (17) aufweisen, wobei die Magnetpole der beiden Polradhälften ineinandergreifen, und mit permanentmagnetischen Teilen (27), die zwischen benachbarten Magnetpolen (17) vorgesehen sind, **dadurch gekennzeichnet**, daß in die Platine (15) zumindest einer Polradhälfte (13.1;13.2) zwischen den Magnetpolen (17) in Längsrichtung der Antriebswelle (5) sich erstreckende Nuten (21) mit einer Hinterschneidung (25) eingebracht sind, und daß die permanentmagnetischen Teile (27) einen Abschnitt aufweisen, der der Form der Nuten (21) entspricht, so daß sie in die Nuten (21) einschiebbar und mittels der Hinterschneidung radial fixierbar sind.

2. Klauenpolgenerator nach Anspruch 1, **dadurch gekennzeichnet**, daß jede Nut (21) einen kreisförmigen Querschnitt aufweist.

3. Klauenpolgenerator nach Anspruch 1, **dadurch gekennzeichnet**, daß jede Nut (21) einen Schwalbenschwanz-förmigen Querschnitt aufweist.

4. Klauenpolgenerator nach einem der vorhergehenden Ansprüche, **dadurch gekennzeichnet**, daß in jede Nut ein Bogensegment (35) aus nichtmagnetischem Material eingebracht ist, das das permanentmagnetische Teil (27) radial nach außen abstützt und sich vorzugsweise über die gesamte Dicke der Platine (15) erstreckt.

5. Klauenpolgenerator nach einem der vorhergehenden Ansprüche, **dadurch gekennzeichnet**, daß in beiden Polradhälften (13.1;13.2) Nuten (21) vorgesehen sind.

6. Klauenpolgenerator nach einem der vorhergehenden Ansprüche, **dadurch gekennzeichnet**, daß sich die permanentmagnetischen Teile (27) in Längsrichtung bis zur Spitze des Magnetpols (17) der anderen Polradhälfte erstrecken.

7. Klauenpolgenerator nach einem der vorhergehenden Ansprüche, **dadurch gekennzeichnet**, daß jedes permanentmagnetische Teil (27) einen V-förmigen Einschnitt (47) aufweist, in den ein Endabschnitt eines Magnetpols (17) eingreift, wobei sich jedes permanetmagnetische Teil (27) bis -in Längsrichtung gesehen- etwa zur Mitte eines Magnetpols (27) erstreckt.

8. Klauenpolgenerator nach einem der Ansprüche 1 bis 6, **dadurch gekennzeichnet,** daß jedes permanentmagnetische Teil (27) eine zur Antriebswelle (5) geschlossene V-förmige Ausnehmung aufweist, in die ein Endabschnitt eines Magnetpols (17) eingreift, wobei der Endabschnitt mit seiner der Antriebswelle (5) zugewandten Fläche beabstandet zum permanentmagnetischen Teil (27) liegt.

9. Klauenpolgenerator nach Anspruch 7 oder 8, **dadurch gekennzeichnet**, daß die einer Polradhälfte (13) zugeordneten permanentmagnetischen Teile (27) auf einem Ring (49) angeordnet sind.

10. Klauenpolgenerator nach einem der vorhergehenden Ansprüche, **dadurch gekennzeichnet**, daß eine Zahn-Scheibe (51) vorgesehen ist, die radial nach außen sich erstreckende Zähne (55) aufweist, die im Raum zwischen benachbarten Magnetpolen (17) liegen und anliegende permanetmagnetische Teile abstützen.

11. Klauenpolgenerator nach Anspruch 10, **dadurch gekennzeichnet**, daß die Zahn-Scheibe (51) aus einem nicht magnetisierbaren Material, beispielsweise Bronze, Messing, V2A-Stahl, glasfaserverstärkten Kunststoff oder Keramik gefertigt ist.

12. Klauenpolgenerator nach einem der Ansprüche 1 bis 8, **dadurch gekennzeichnet**, daß die den beiden Polradhälften (13) zugeordneten permanentmagnetischen Teile (27) auf einem Ring (59) angeordnet sind.

13. Klauenpolgenerator nach Anspruch 7, **dadurch gekennzeichnet**, daß die permanentmagnetischen Teile (27) der beiden Polradhälften (13.1;13.2) im Bereich zwischen benachbarten Magnetpolen (17) miteinander zu einer Baueinheit verbunden sind.

14. Klauenpolgenerator nach einem der vorhergehenden Ansprüche, **dadurch gekennzeichnet**, daß die Magnetpole (17) konisch zulaufende Seitenflächen aufweisen, und daß die permanentmagnetischen Teile (27) daran angepaßte Seitenflächen besitzen, wobei mit Hilfe der konischen Form auf die permanentmagnetischen Teile (27) wirkende Zentrifugalkräfte in die Magnetpole einleitbar sind.

15. Klauenpolgenerator nach Anspruch 10 oder 11, **dadurch gekennzeichnet**, daß die der Streuflußkompensation dienenden permanentmagnetischen Teile (27) beziehungsweise der diese tragende Ring (59) und die Zahn-Scheibe (51) durch Imprägnieren zusammengefügt sind.

16. Klauenpolgenerator nach einem der vorhergehenden Ansprüche, **dadurch gekennzeichnet**, daß die permanentmagnetischen Teile (27) mit einem dünnen thermisch beständigen Kunststoff überzogen sind.

## Claims

1. Claw-pole generator having two rotor halves (13) which are fitted on a drive shaft and have claw-shaped magnet poles (17) fitted on a plate (15) in the form of a disc, with the magnet poles of the two rotor halves engaging in one another, and having permanently magnetic parts (27) which are provided between adjacent magnet poles (17), **characterized** in that slots (21) which have an undercut (25) and extend in the longitudinal direction of the drive shaft (5) are incorporated between the magnet poles (17) in the plate (15) of at least one rotor half (13.1; 13.2), and in that the permanently magnetic parts (27) have a section which corresponds to the shape of the slots (21) so that they can be pushed into the slots (21) and can be fixed radially by means of the undercut.

2. Claw-pole generator according to Claim 1, **characterized** in that each slot (21) has a circular cross section.

3. Claw-pole generator according to Claim 1, **characterized** in that each slot (21) has a dovetail cross section.

4. Claw-pole generator according to one of the preceding claims, **characterized** in that a curved segment (35) composed of nonmagnetic material is incorporated in each slot, supports the permanently magnetic part (27) radially on the outside, and preferably extends over the entire thickness of the plate (15).

5. Claw-pole generator according to one of the preceding claims, **characterized** in that slots (21) are provided in both rotor halves (13.1; 13.2).

6. Claw-pole generator according to one of the preceding claims, **characterized** in that the permanently magnetic parts (27) extend in the longitudinal direction as far as the tip of the magnet pole (17) of the other rotor half.

7. Claw-pole generator according to one of the preceding claims, **characterized** in that each permanently magnetic part (27) has a V-shaped incision (47) in which an end section of a magnet pole (17) engages, with each permanently magnetic part (27) extending - seen in the longitudinal direction - roughly as far as the centre of a magnet pole (27).

8. Claw-pole generator according to one of Claims 1 to 6, **characterized** in that each permanently magnetic part (27) has a V-shaped recess which is closed towards the drive shaft (5), into which an end section on a magnet pole (17) engages, with the surface of the end section which faces the drive shaft (5) being located at a distance from the permanently magnetic part (27).

9. Claw-pole generator according to Claim 7 or 8, **characterized** in that the permanently magnetic parts (27) associated with one rotor half (13) are arranged on a ring (49).

10. Claw-pole generator according to one of the preceding claims, **characterized** in that a toothed disc (51) is provided which has teeth (55) which extend radially outwards, are located in the space between adjacent magnet poles (17), and support permanently magnetic parts lying on them.

11. Claw-pole generator according to Claim 10, **characterized** in that the toothed disc (51) is made from a nonmagnetic material, for example bronze, brass, V2A steel, glass-fibre reinforced plastic or ceramic.

12. Claw-pole generator according to one of Claims 1 to 8, **characterized** in that the permanently magnetic parts (27) which are associated with the two rotor halves (13) are arranged on a ring (59).

13. Claw-pole generator according to Claim 7, **characterized** in that the permanently magnetic parts (27) of the two rotor halves (13.1; 13.2) are connected to one another to form a structural unit in the region between adjacent magnet poles (17).

14. Claw-pole generator according to one of the preceding claims, **characterized** in that the magnet poles (17) have conically tapering side surfaces, and in that the permanently magnetic parts (27) have side surfaces matched to them, in which case centrifugal forces which act on the permanently magnetic parts (27) by virtue of the conical shape can be introduced into the magnet poles.

15. Claw-pole generator according to Claim 10 or 11, **characterized** in that the permanently magnet parts (27), which are used for stray flux compensation, and/or the ring (59) which supports them, and the toothed disc (51) are joined together by impregnation.

16. Claw-pole generator according to one of the preceding claims, **characterized** in that the permanently magnetic parts (27) are coated with a thin thermally resistant plastic.

## Revendications

1. Alternateur à rotor à griffes comportant deux moitiés de roue polaire (13) installées sur l'axe d'entraînement ayant des pôles magnétiques (17) en forme de griffes sur une platine (15) en forme de disque, les pôles magnétiques des deux moitiés de roue polaire s'interpénétrant, et des pièces d'aimants permanents (27) prévues entre les pôles magnétiques voisins (17),
caractérisé en ce que
• dans la platine (15) d'au moins une moitié de roue polaire (13.1 ; 13.2), entre les pôles magnétiques (17), il y a des rainures (21) s'étendant dans la direction longitudinale de l'axe d'entraînement (5), avec une contre-dépouille (25) et
• les pièces d'aimants permanents (27) ont une section correspondant à la forme des rainures (21) pour pouvoir se glisser dans les rainures (21) et y être bloquées dans la direction radiale par la contre-dépouille.

2. Alternateur selon la revendication 1,
caractérisé en ce que
chaque rainure (21) a une section de forme circulaire.

3. Alternateur selon la revendication 1,
caractérisée en ce que
chaque rainure (21) a une section en forme de queue d'aronde.

4. Alternateur selon l'une quelconque des revendications précédentes,
caractérisé en ce que
chaque rainure reçoit un segment courbe (35) en matière non magnétique qui soutient radialement vers l'extérieur la pièce d'aimant permanent (27) et s'étend de préférence sur toute l'épaisseur de la platine (15).

5. Alternateur selon l'une quelconque des revendications précédentes,
caractérisé par
des rainures (21) prévues dans les deux moitiés de roue polaire (13.1 ; 13.2).

6. Alternateur selon l'une quelconque des revendications précédentes,
caractérisé en ce que
les pièces d'aimants permanents (27) s'étendent dans la direction longitudinale jusqu'au niveau de la pointe du pôle magnétique (17) de l'autre moitié de roue polaire.

7. Alternateur selon l'une quelconque des revendications précédentes,
caractérisé en ce que
chaque pièce d'aimant permanent (27) a une encoche (47) en forme de V dans laquelle pénètre l'extrémité d'un pôle magnétique (17), et chaque pièce d'aimant permanent (27) s'étend jusqu'au milieu d'un pôle magnétique (17) lorsqu'on regarde dans la direction longitudinale.

8. Alternateur selon l'une quelconque des revendications 1 à 6,
caractérisé en ce que
• chaque pièce d'aimant permanent (27) présente une cavité en forme de V, fermée en direction de l'axe d'entraînement (5), cavité dans laquelle pénètre une extrémité d'un pôle magnétique (17),
• l'extrémité avec sa surface tournée vers l'axe d'entraînement (5) étant écartée de la pièce d'aimant permanent (27).

9. Alternateur selon la revendication 7 ou 8,
caractérisé en ce que
les pièces d'aimants permanents (27) associées à une moitié de roue polaire (13) sont prévues sur un anneau (49).

10. Alternateur selon l'une quelconque des revendications précédentes,
caractérisé par
un disque (51) muni de dents (55) s'étendant radialement vers l'extérieur et placées dans l'intervalle entre les pôles magnétiques voisins (17), pour soutenir les pièces d'aimants permanents.

11. Alternateur selon la revendication 10,
caractérisé en ce que
le disque à dents (51) est en matière non aimantée, par exemple en bronze, laiton, acier V2A, matière plastique renforcée par des fibres de verre ou matière céramique.

12. Alternateur selon l'une quelconque des revendications 1 à 8,
caractérisé en ce que
les pièces d'aimants permanents (27) associées aux deux roues polaires (13) sont installées sur un anneau (59).

13. Alternateur selon la revendication 7,
caractérisé en ce que
les pièces d'aimants permanents (27) des deux moitiés de roue polaire (13.1 ; 13.2) sont reliées pour former un ensemble dans la zone entre les pôles magnétiques (17) voisins.

14. Alternateur selon l'une quelconque des revendications précédentes,
caractérisé en ce que
les pôles magnétiques (17) ont des surfaces latérales se réduisant selon une forme conique et les pièces d'aimants permanents (27) ont des surfaces latérales adaptées, la forme conique permettant d'induire dans les pôles magnétiques les forces centrifuges agissant sur les pièces d'aimants permanents (27).

15. Alternateur selon l'une quelconque des revendications 10 ou 11,
caractérisé en ce que
les pièces d'aimants permanents (27), servant à la compensation du flux dispersé, ou l'anneau (59), qui porte ces pièces et le disque à dents (51), sont assemblés par imprégnation.

16. Alternateur selon l'une quelconque des revendications précédentes,
caractérisée en ce que
les pièces d'aimants permanents (27) sont revêtues d'une mince couche de matière plastique résistant à la température.
